Europäisches Patentamt

European Patent Office

Office européen des brevets

(11) Publication number: **0 378 436**
**A2**

# (12) EUROPEAN PATENT APPLICATION

(21) Application number: **90300374.7**

(22) Date of filing: **12.01.90**

(51) Int. Cl.5: **F16J 15/02**

(30) Priority: **13.01.89 JP 4755/89**

(43) Date of publication of application:
**18.07.90 Bulletin 90/29**

(84) Designated Contracting States:
**DE FR GB NL**

(71) Applicant: **DORYOKURO KAKUNENRYO KAIHATSU JIGYODAN**
**9-13, Akasaka 1-chome**
**Minato-ku Tokyo 107(JP)**

Applicant: **KABUSHIKI KAISHA HINODE SEISAKUSHO**
**3-21-8, Shibamata Katsushiki-ku**
**Tokyo 125(JP)**

(72) Inventor: **Shibata, Tomofumi, Doryokuro Kakunenryo Kaihatsu**
**Jigyodan, Tokai Jigyosho, 4-33**
**Oaza-Muramatsu**
**Tokai-Mura, Naka-gun, Ibaraki 319-11(JP)**
Inventor: **Honda, Naoto, Doryokuro Kakunenryo Kaihatsu**
**Jigyodan, Tokai Jigyosho, 4-33**
**Oaza-Muramatsu**
**Tokai-Mura, Naka-gun, Ibaraki 319-11(JP)**
Inventor: **Shinohara, Kesao**
**3-21-8, Shibamata Katsushiha-ku**
**Tokyo 105(JP)**

(74) Representative: **Bubb, Antony John Allen et al**
**GEE & CO. Chancery House Chancery Lane**
**London WC2A 1QU(GB)**

(54) **Elastic-type metal gasket.**

(57) An elastic-type metal gasket includes a gasket body (1) consisting of a bent metal plate, and a curved leaf spring (2) provided along an inner surface of the gasket body.

FIG. 1

## ELASTIC-TYPE METAL GASKET

This invention relates to an elastic-type metal gasket having a metal gasket body and capable of following up dynamic displacement of a surface to be sealed.

In general, gaskets can be largely classified into three types, namely rubber gaskets, non-elastic metal gaskets and elastic metal gaskets.

Rubber gaskets are such that they allow transmission of molecules due to extended use and leak continuously. Non-elastic metal gaskets develop openings temporarily under application of impact loads and therefore leak intermittently. Thus, both types of gaskets exhibit a poor sealing property.

The elastic-type metal gasket is advantageous in that its sealing property is high in comparison with the gaskets mentioned above. For example, as shown in Fig. 4, an elastic-type metal gasket disclosed in the specification of Japanese Patent Publication (KOKOKU) No. 51-46220 includes a coil spring 11 comprising closely wound steel or the like, an intermediate gasket 12, provided on the outer side of the coil spring 11, having a generally C-shaped cross section and comprising copper, aluminum, nickel or the like, and a gasket body 13 provided on the outer side of the intermediate gasket 12.

However, with the well-known elastic-type metal gasket disclosed in the aforementioned publication, the fact that the coil spring 11 and metal intermediate gasket are required in addition to the gasket body 13 results in higher manufacturing cost, a more complicated assembly operation and greater weight.

An object of the present invention is to provide an elastic-type metal gasket which is inexpensive to manufacture, light in weight and possessed of a highly reliable sealing effect.

According to the present invention, the foregoing object is attained by providing an elastic-type metal gasket comprising a gasket body consisting of a bent metal plate, and a C-shaped curved leaf spring provided on an inner surface of the gasket body.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a perspective view, partially broken away, showing an embodiment of an elastic-type metal gasket according to the present invention;

Fig. 2 is a longitudinal sectional view illustrating the elastic-type metal gasket of the embodiment in use;

Fig. 3 is a partially enlarged view showing the elastic-type metal gasket of the embodiment; and

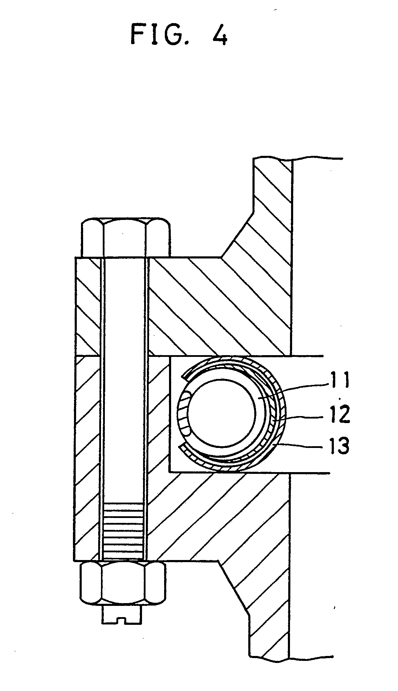

Fig. 4 is a sectional view illustrating an elastic-type metal gasket according to the prior art.

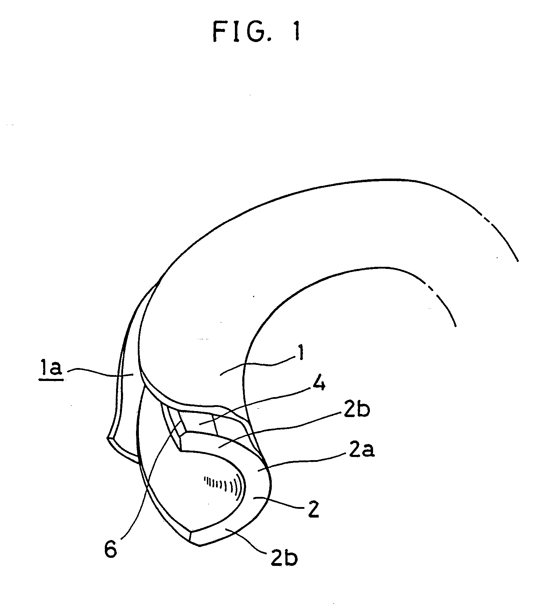

An embodiment of the present invention will now be described in detail with reference to Figs.1 - 3.

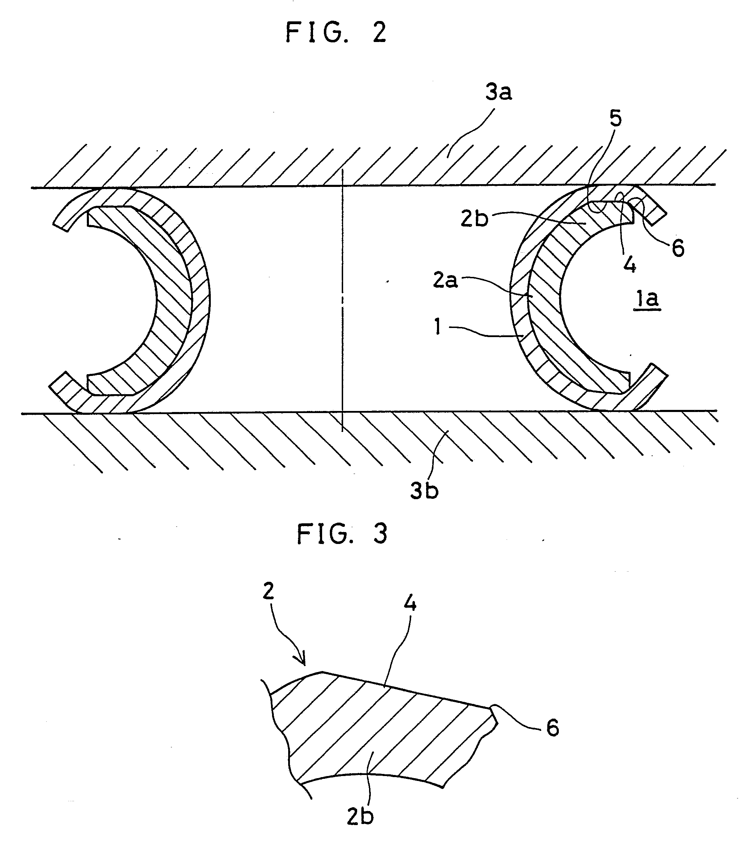

As shown in Figs. 1 and 2, a metal gasket body 1 having a generally C-shaped cross section is formed into an annular configuration, and a curved leaf spring 2 is formed to have a generally C-shaped cross section and provided along the inner surface of the gasket body 1. By virtue of the curved leaf spring 2, the gasket body 1 is deformed at application of an impact load to follow up dynamic displacement of sealed surfaces 3a, 3b which occurs when the impact load is applied. As a result, the gasket exhibits an improved sealing property.

The material constituting the gasket body 1 is required to be metal in order to prevent transmission of molecules therethrough. Preferred examples of the metal are aluminum or stainless steel, which excel in corrosion resistance. However, the materials are not limited to aluminum or stainless steel. For example, the material can be selected in conformity with the properties of the surfaces to be sealed.

As for the cross-sectional shape of the gasket body 1, a closed configuration can be adopted rather than having an opening 1a provided to afford the C-shaped cross section of the embodiment. However, if the gasket body 1 is formed to have the opening 1a, it is easier to insert the curved leaf spring 2 into the gasket body 1. More specifically, after the curved leaf spring 2 which is straight in the longitudinal direction is inserted into the longitudinally straight gasket body 1 from the opening 1a formed in the gasket body, both members can be formed into annular configuration simultaneously. This makes fabrication of the gasket very simple.

The opening in the gasket body 1 can be formed on the outer side of the gasket ring, as in the illustrated embodiment, or on the inner side of the gasket ring if desired. The present invention also covers an arrangement in which the gasket body 1 and curved leaf spring 2 are fixedly secured to each other partially or in their entirety.

Further, with reference also to Fig. 3, the curved leaf spring 2 having the generally C-shaped configuration has a central portion 2a which is the part that primarily undergoes deformation. There is the danger that stress will concentrate in this region and result in plastic deformation of the central portion 2a. In order to prevent this from occurring, the gasket should be so adapted that portions other than the central portion 2a also deform. Accordingly, the outer surface adjacent the edges of portions 2b on both sides of the central portion 2a is cut away to reduce the thickness of the leaf spring 2, as a result of which deformation will be shared by a stress-sharing portion 4. The inner surface of the gasket body 1 at a portion opposing the stress-sharing portion 4 of the curved leaf spring 2 is formed to have a seat surface 5 in intimate contact with the stress-sharing portion 4.

A corner portion on the outer surface of the curved leaf spring 2 at the end thereof is chamfered to form an edge 6, which improves the sealing property of the gasket.

The elastic-type metal gasket of the embodiment constructed as set forth above operates in a manner which will now be described.

As shown in Fig. 2, the gasket is interposed between the upper and lower surfaces 3a, 3b to be sealed, as a result of which the metal gasket body 1 comes into contact with these surfaces 3a, 3b to form a seal. Leakage due to transmission of molecules through the gasket can thus be prevented. In an experiment, it was demonstrated that a sealing property on the order of $10^{-8}$ atm could be obtained, and even better sealability at higher levels of vacuum is expected.

At the occurrence of an impact load, the curved leaf spring 2 causes the gasket body 1 to deform to follow up dynamic displacement of the surfaces 3a, 3b to be sealed. As a result, leakage is prevented also under application of an impact load.

In the elastic-type metal gasket according to the present invention described above, a curved leaf spring is provided along the inner surface of a gasket body comprising a bent metal plate. The gasket therefore is ssimple to manufacture, low in manufacturing cost and light in weight.

Furthermore, since stress is dispersed in stress sharing portions of the curved leaf spring, concentration of stress in the central portion of the curved leaf spring can be prevented, thereby preventing plastic deformation of the leaf spring and prolonging the service life of the gasket.

Since the gasket body 1 is pressed by the edge 6 of the curved leaf spring 2, the sealing property of the gasket is greatly improved.

As many apparently widely different embodiments of the present invention can be made without departing from the spirit and scope thereof, it is to be understood that the invention is not limited to the specific embodiments thereof except as defined in the appended claims.

## Claims

1. An elastic-type metal gasket comprising:
a gasket body consisting of a bent metal plate; and
a curved leaf spring provided along an inner surface of said gasket body.

2. The gasket according to claim 1, wherein an edge portion of said curved leaf spring has a corner portion on an outer surface thereof, said corner portion being chamfered to form an edge.

3. An elastic-type metal gasket comprising:
a gasket body consisting of a metal plate bent into a generally C-shaped configuration; and
a curved leaf spring bent into a generally C-shaped configuration and provided along an inner surface of said gasket body;
said curved leaf spring having a central portion and edge portions on both sides contiguous to said central portion, said edge portions being reduced in thickness to form stress-sharing portions.

4. The gasket according to claim 3, wherein an edge portion of said curved leaf spring has a corner portion on an outer surface thereof, said corner portion being chamfered to form an edge.

# FIG. 1

# FIG. 2

3a

5

2b

2a

6

4

<u>1a</u>

1

3b

# FIG. 3

2

4

6

2b

# FIG. 4